Europäisches Patentamt

European Patent Office

Office européen des brevets

(19)

(11) Numéro de publication : **0 192 692**
**B1**

## (12) FASCICULE DE BREVET EUROPÉEN

(45) Date de publication du fascicule du brevet :
13.04.88

(21) Numéro de dépôt : 85904265.7

(22) Date de dépôt : 09.09.85

(86) Numéro de dépôt international :
PCT/FR 85/00241

(87) Numéro de publication internationale :
WO/8601867 (27.03.86 Gazette 86/07)

(51) Int. Cl.⁴ : **F 16 F   1/04**, F 16 F   1/12,
**A 47 F   5/08**

(54) RESSORT DE RAPPEL ET SON DISPOSITIF DE GUIDAGE.

(30) Priorité : 12.09.84 FR 8414018

(43) Date de publication de la demande :
03.09.86 Bulletin 86/36

(45) Mention de la délivrance du brevet :
13.04.88 Bulletin 88/15

(84) Etats contractants désignés :
AT BE CH DE FR GB IT LI LU NL SE

(56) Documents cités :
FR-A- 2 527 913
GB-A- 2 071 809
US-A- 2 954 128
US-A- 2 954 129
US-A- 3 110 402

(73) Titulaire : SOCIETE VYNEX SA
Balaives
F-08160 Flize (FR)

(72) Inventeur : DECHIROT, Jean-Pierre
3, avenue de Gaulle
Balan F-08200 Sedan (FR)

(74) Mandataire : Gérardin, Robert Jean René
Cabinet Robert Gérardin 3A, avenue Georges Clémenceau Boîte Postale 2 719
F-51055 Reims Cedex (FR)

Jouve, 18, rue St-Denis, 75001 Paris, France

## Description

L'invention concerne un ressort de rappel hélicoïdal et son dispositif de guidage.

Il est connu d'utiliser des ressorts cylindriques de compression, obtenus à partir de fil d'acier enroulé en hélice, pour obtenir le rappel, dans une position déterminée, d'éléments basculants ou coulissants. Ce système de rappel est d'ailleurs très largement utilisé en mécanique.

Toutefois, compte-tenu de leur flexibilité latérale, ces ressorts doivent, lorsqu'ils dépassent une certaine longueur, être guidés afin d'empêcher leur flambement. Ce guidage est obtenu généralement extérieurement par un fourreau, intérieurement par un axe de diamètre légèrement inférieur au diamètre intérieur des spires ou, indifféremment, par plusieurs tiges régulièrement réparties. Ces modes de guidage font réserver plus particulièrement les ressorts cylindriques de compression au rappel d'éléments coulissants par rapport au dispositif de guidage.

On connaît déjà des dispositifs de rappel correspondant au préambule de la revendication 1 : brevet français FR-A-2 527 913, dont le ressort, guidé par une broche support, coulisse librement sur celle-ci ; brevets des états unis d'Amérique US-A-2 954 128 et US-A-2 954 129 dont les ressorts sont guidés chacun par trois des tiges constituant le fond d'un présentoir, à raison d'une tige à l'intérieur et de deux tiges à l'extérieur des spires des ressorts. Avec de tels dispositifs, des éléments quelconques, non obligatoirement guidés dans leur déplacement par le système utilisé pour le maintien latéral du ressort, ne peuvent être rappelés sur de grandes longueurs.

La présente invention a pour but de remédier à ces inconvénients. L'invention telle qu'elle est caractérisée dans les revendications résout le problème consistant à fixer le ressort de rappel directement contre la base d'appui et à répartir la poussée sur le maximum de surface des éléments à rappeler ; en maintenant ceux-ci dans une position déterminée par rapport à leur trajectoire, sans utiliser de moyen intermédiaire.

Le ressort est constitué de spires de deux diamètres différents, réparties alternativement sur toute sa longueur, et son dispositif de guidage est constitué d'une ou de plusieurs tiges ou lames rigides ou souples, droites ou sinueuses, insérées entre les spires de grand diamètre et les spires de petit diamètre du ressort ; le ressort est fixé à l'une de ses extrémités par l'intermédiaire d'un œil, réalisé à l'extrémité libre de la première spire et situé à une distance de l'axe du ressort correspondant au rayon moyen des spires, et de la, ou de l'une des tiges de guidage munie à cet effet d'une collerette ou d'une rondelle retenue par un écrou ; la poussée du ressort est transmise aux éléments à rappeler par l'intermédiaire de l'une des grandes spires dont l'extrémité libre est recourbée vers l'extérieur.

Les avantages obtenus grâce à cette invention consistent essentiellement en ceci, que les éléments sont rappelés sur toute leur hauteur et maintenus perpendiculairement au système qui les soutient par l'intermédiaire de la partie repliée vers l'extérieur réalisée à l'extrémité libre du ressort, sans aucun flambement de celui-ci, quelle que soit la longueur, sa compression et sa déformation latérale.

L'invention est exposée ci-après plus en détail à l'aide des dessins représentant seulement un mode de réalisation donné à titre d'exemple.

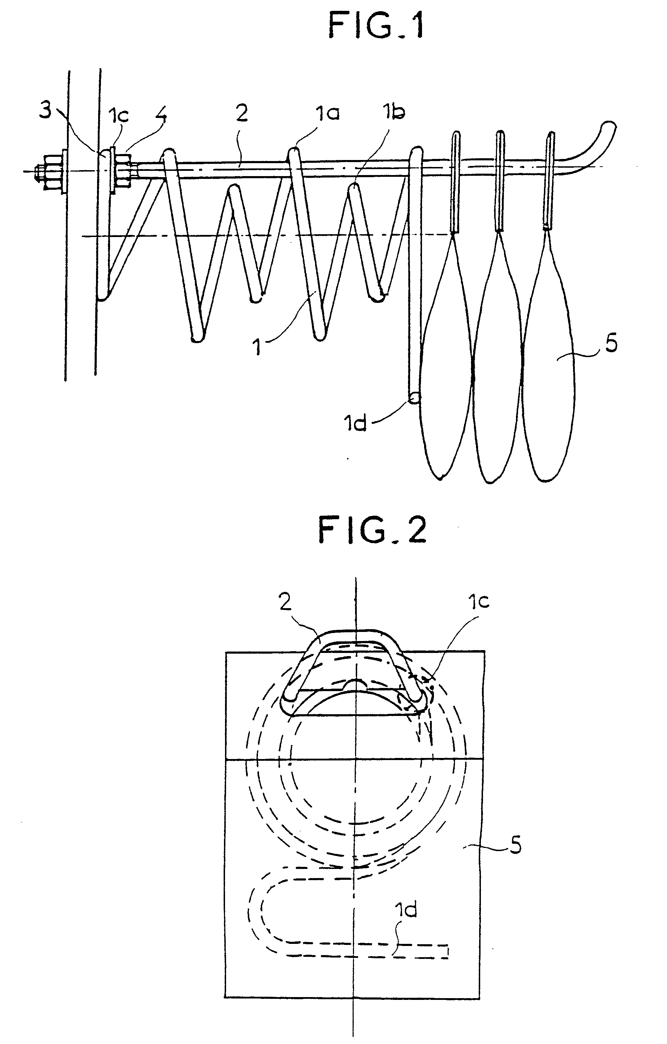

La figure 1 représente, une vue de côté du système de rappel.

La figure 2 représente, une vue de face du système de rappel.

Les figures représentent un systéme de rappel de sachets de conditionnement de produits en bout de broches de meubles présentoirs de magasins pratiquant la vente en libre service, comprenant essentiellement un ressort 1, constitué alternativement de grandes spirès 1a et de petites spires 1b, guidé par deux broches 2 réunies par leur extrémité libre et insérées entre les grandes spires 1a et les petites spires 1b, fixé par l'intermédiaire d'un œil 1c, réalisé à l'extrémité libre de la spire située à l'extrémité arrière du ressort, d'une rondelle 3 et d'un écrou 4, montés sur les extrémités filetées des broches 2 et concourant à la fixation de ces derniéres, en combinaison avec une autre rondelle et un autre écrou situé derrière la cloison du présentoir.

Conformément à la présente invention les sachets de conditionnement 5 sont rappelés vers l'extrémité des broches 2 sans aucun flambement du ressort 1, quelle que soit la longueur et la compression de celui-ci, puisque toutes les spires sont maintenues latéralement par les broches 2 quelle que soit leur déformation.

Ce ressort de rappel et son dispositif de guidage peuvent être utilisés sans inconvénient dans d'autres domaines que celui du rappel de conditionnement en bout de broches de présentoirs, avec des tiges de guidage sinueuses, par exemple, afin d'obtenir un rappel selon une trajectoire quelconque prédéterminée par la forme des tiges.

## Revendications

1. Ressort de rappel hélicoïdal et son dispositif de guidage caractérisé en ce que le ressort (1) est constitué alternativement de spires de deux diamètres différents (1a et 1b) et en ce que le dispositif de guidage est constitué d'une ou de plusieurs tiges (2) ou lames rigides ou souples, droites ou courbes, insérées entre les spires de grand diamètre (1a) et les spires de petit diamètre (1b).

2. Ressort de rappel et son dispositif de guidage selon la revendication 1 caractérisé en ce que le ressort (1) est fixé, à l'une de ses extrémités, par l'intermédiaire d'un oeil (1c) réalisé à l'extrémité libre de la première spire.

3. Ressort de rappel et son dispositif de guidage selon la revendication 1 caractérisé en ce que l'oeil (1c) de fixation est disposé à une distance de l'axe du ressort correspondant au rayon moyen des spires (1a et 1b).

4. Ressort de rappel et son dispositif de guidage selon les revendications 1 et 3 caractérisé en ce que le ressort (1) est fixé par l'intermédiaire de la ou de l'une des tiges de guidage (2) munie à cet effet d'une collerette ou d'une rondelle (3) retenue par un écrou (4).

5. Ressort de rappel et son dispositif de guidage selon la revendication 1 caractérisé en ce que la poussée du ressort (1) est transmise aux éléments à rappeler (5) par l'intermédiaire de l'une des grandes spires dont l'extrémité libre (1d) est recourbée vers l'extérieur.

## Claims

1. Helical return spring and its guiding device, characterised in that the spring (1) consists of alternate turns of two different diameters (1a and 1b) and in that the guiding device consists of one or a plurality of rigid or flexible, straight or curved, rods or blades (2) incorporated between the large diameter turns (1a) and the small diameter turns (1b).

2. Return spring and its guiding device according to Claim 1, characterised in that the spring (1) is at one of its ends fixed by means of a lug (1c) formed at the free end of the first turn.

3. Return spring and its guiding device according to Claim 1, characterised in that the fixing lug (1c) is disposed at a distance from the axis of the spring which corresponds to the mean radius of the turns (1a and 1b).

4. Return spring and its guiding device according to Claims 1 and 3, characterised in that the spring (1) is fixed by the or one of the guide rods (2) which is for the purpose provided with a collar or a washer (3) retained by a nut (4).

5. Return spring and its guiding device according to Claim 1, characterised in that the thrust of the spring (1) is transmitted to the elements (5) which are to be returned, through one of the large turns of which the free end (1d) is bent over and outwardly.

## Patentansprüche

1. Schraubenförmige Rückholfeder und ihre Führung, dadurch gekennzeichnet, daß die Feder (1) aus abwechselnden Windungen mit zwei verschiedenen Durchmessern (1a und 1b) gebildet ist und daß die Führung durch eine oder mehrere Stangen (2) oder Streifen, und zwar starr oder biegsam, gerade oder gekrümmt, gebildet ist, die zwischen die Windungen mit großem Durchmesser (1a) und die Windungen mit kleinem Durchmesser (1b) eingebracht sind.

2. Rückholfeder und ihre Führung nach Anspruch 1, dadurch gekennzeichnet, daß die Feder (1) an einem ihrer Enden mit Hilfe eines Auges (1c) fixiert ist, das am freien Ende der ersten Windung vorgesehen ist.

3. Rückholfeder und ihre Führung nach Anspruch 1, dadurch gekennzeichnet, daß das Fixierauge (1c) im Abstand zur Federachse entsprechend dem mittleren Radius der Windungen (1a und 1b) angeordnet ist.

4. Rückholfeder und ihre Führung nach den Ansprüchen 1 und 3, dadurch gekennzeichnet, daß die Feder (1) mit Hilfe der oder einer der Führungsstangen (2) fixiert ist, die zu diesem Zweck mit einem Befestigungsflansch oder mit einer Unterlagsscheibe (3) versehen ist, die durch eine Mutter (4) gehalten ist.

5. Rückholfeder und ihre Führung nach Anspruch 1, dadurch gekennzeichnet, daß der Druck der Feder (1) mit Hilfe einer der großen Windungen auf die Rückstellelemente (5) übertragen wird, wobei das freie Ende (1d) dieser großen Bindung nach außen zurückgebogen ist.

# FIG.1

# FIG.2